**Europäisches Patentamt**

**European Patent Office**

**Office européen des brevets**

(19)

(11) Numéro de publication: **0 002 981**
**B1**

(12) **FASCICULE DE BREVET EUROPEEN**

(45) Date de publication du fascicule du brevet: **23.06.82**

(51) Int. Cl.³: **H 02 P 9/44,** H 02 P 9/00, H 02 J 3/14, G 05 F 1/12

(21) Numéro de dépôt: **78400241.2**

(22) Date de dépôt: **14.12.78**

(54) **Procédé pour régler la tension d'un générateur électrique et système pour sa mise en oeuvre.**

(30) Priorité: **27.12.77 FR 7739289**

(43) Date de publication de la demande:
**11.07.79 Bulletin 79/14**

(45) Mention de la délivrance du brevet:
**23.06.82 Bulletin 82/25**

(84) Etats contractants désignés:
**BE CH DE GB LU NL**

(56) Documents cités:
**DE - C - 844 028**
**FR - A - 1 589 454**
**FR - A - 2 087 386**
**FR - A - 2 294 573**
**US - A - 3 862 430**

(73) Titulaire: **MOTEURS LEROY-SOMER Société dite:**
**Boulevard Marcellin Leroy**
**F-16000 Angouleme (FR)**

(72) Inventeur: **Gobaud, Michel**
**43 rue Louis Desbrandes**
**F-16000 Angouleme (FR)**

(74) Mandataire: **Bouju, André et al,**
**Cabinet Bouju 38 avenue de la Grande Armée**
**F-75017 Paris (FR)**

Courier Press, Leamington Spa, England.

## Procédé pour régler la tension d'un générateur électrique et système pour sa mise en oeuvre

La présente invention concerne un procédé pour régler la tension aux bornes d'un générateur électrique alternatif autonome à régime variable tel qu'un générateur, actionné par une machine mue par unfluide naturel.

Elle concerne également un système pour mettre en oeuvre ce procédé.

Dans les installations de ce genre, les aléas du fluide naturel utilisé, ainsi que les variations de charges du réseau, peuvent avoir des conséquences importantes sur les caractéristiques du courant fourni.

Il est connu, d'après la publication FR—A—1.589.454, de régler, à quelques hertz près, la fréquence du courant en mettant sélectivement en circuit des résistances de dissipation en fonction des variations de fréquence constatées par rapport à une fréquence de référence.

Mais un tel réglage, s'intéressant uniquement à la fréquence, n'est pas satisfaisant. En effet, si, par exemple, dans un circuit de charge purement résistif, on branche un moteur tournant à vide, la fréquence varie très peu alors que la tension chute fortement en raison de la variation importante du facteur de puissance. Or, de telles variations de tensions sont encore moins acceptables que des variations de fréquence.

La présente invention a pour but de réaliser un procédé de réglage prioritaire de la tension dans les réseaux du genre précité qui, en même temps, maintienne la fréquence dans des limites acceptables.

L'invention a également pour but de réaliser un système pour la mise en oeuvre de ce procédé.

Suivant un premier aspect de l'invention, le procédé pour régler la tension aux bornes d'un générateur électrique alternatif autonome à régime variable tel qu'un générateur actionné par une machine mue par un fluide naturel, notamment d'une génératrice asynchrone, au cours duquel on règle automatiquement la fréquence par rapport à une valeur de consigne, en mettant sélectivement en circuit des résistances de dissipation, est caractérisé en ce qu'on effectue les operations suivantes:

a) on mesure la tension dans au moins l'une des phases du générateur;

b) on fait varier automatiquement la valeur de consigne de la fréquence en fonction des variations de tension, la variation de la valeur de consigne étant en sens inverse de la variation de tension constatée.

Pour une tension donnée constante, la fréquence est réglée à une valeur fixe. Si la tension varie, on accepte, par variation de la valeur de consigne, une certaine variation de la fréquence en vue de rétablir la tension.

Suivant une réalisation préférée de l'invention, on convertit la fréquence mesurée en une tension continue analogique, et l'on matérialise la valeur de consigne sous la forme d'un potentiel de référence fonction de la tension produite par le générateur.

Suivant un second aspect de l'invention, le système pour régler la tension aux bornes d'un générateur électrique alternatif autonome à régime variable tel qu'un générateur actionné par une machine mue par un fluide naturel, tel qu'une génératrice asynchrone, est destinée à appliquer un procédé conforme à celui décrit plus haut. Il comprend des résistances de dissipation pouvant être mises sélectivement en circuit et il est caractérisé en ce qu'il comprend:

a) des moyens de mesure de la tension dans au moins l'une des phases du générateur;

b) des moyens sensibles à la tension mesurée pour faire varier la valeur de consigne d'un régulateur de fréquence en sens inverse des variations de la tension mesurée, ce régulateur étant relié à des moyens de mise en circuit des résistances de dissipation.

Suivant une réalisation avantageuse de l'invention, les moyens pour mettre en circuit les résistances de dissipations comprennent pour chaque résistance, un comparateur dont les entrées sont reliées respectivement à une source de potentiel de référence et à un point d'une chaîne de résistances en série, dont une extrémité est elle-même reliée à la source de potentiel de référence et dont l'autre extrémité est reliée à la sortie d'un transducteur délivrant une tension continue proportionnelle à la fréquence du courant délivré par le générateur, et la sortie de chaque comparateur est reliée à la commande d'un interrupteur en série avec chaque résistance de dissipation.

De préférence, le système comprend des moyens sensibles à la tension dans au moins l'une des phases du générateur pour mettre le système hors service dans le cas d'une baisse anormale de la tension.

D'autres particularités et avantages de l'invention ressortiront encore de la description détaillée qui va suivre.

Aux dessins annexés, donnés à titre d'exemple non limitatif:

— la figure 1 est un schéma électrique par blocs de l'ensemble du système conforme à l'invention,

— la figure 2 est un schéma détaillé de l'étage d'alimentation et d'adjustement du potentiel de référence,

— la figure 3 est un diagramme caractéristique du transducteur convertissant la fréquence en tension,

— la figure 4 est un schéma électrique détaillé d'un étage de comparaison et d'enclenchement.

— la figure 5 est un schéma détaillé de l'étage de détection et de contrôle des chutes anormales de tension.

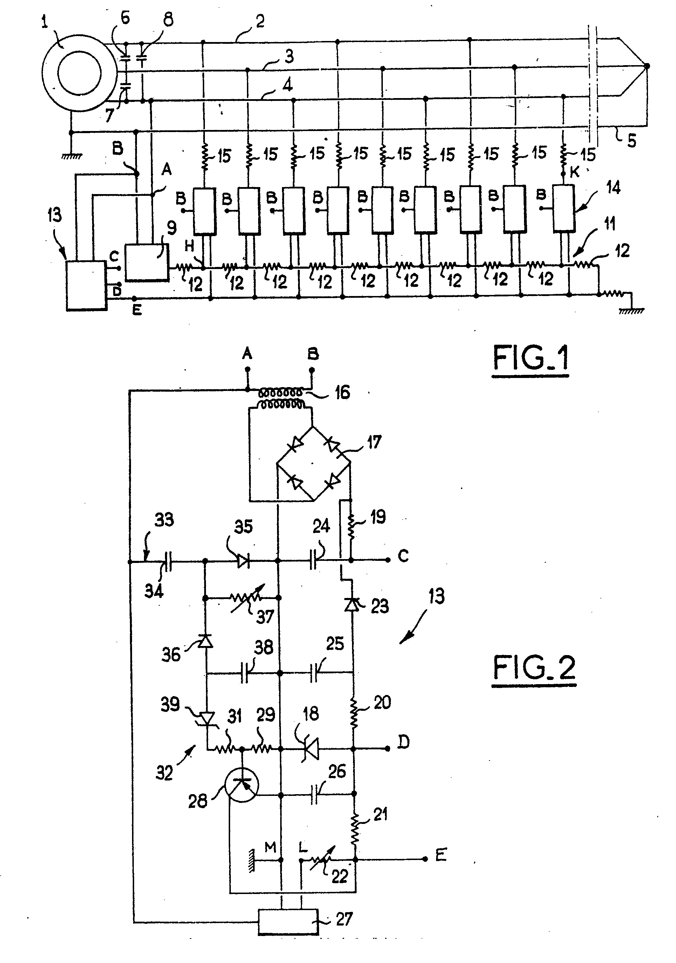

En référence à la figure 1, une génératrice asynchrone 1 débite du courant dans trois phases 2, 3, 4, constituant un réseau d'utilisation muni d'un conducteur neutre 5 relié à la terre.

Les trois phases sont réunies entre elles par des condensateurs 6, 7, 8, pour permettre l'amorçage de la génératrice.

Un transducteur 9 d'un type connu est branché entre la phase 4 et le neutre 5 par des bornes A, B, pour détecter la fréquence du courant et la convertir en une tension continue appliquée à une ligne 11 formant une chaîne de résistances qui sont toutes désignées par la même référence 12, mais qui peuvent avoir des valeurs différentes les unes des autres.

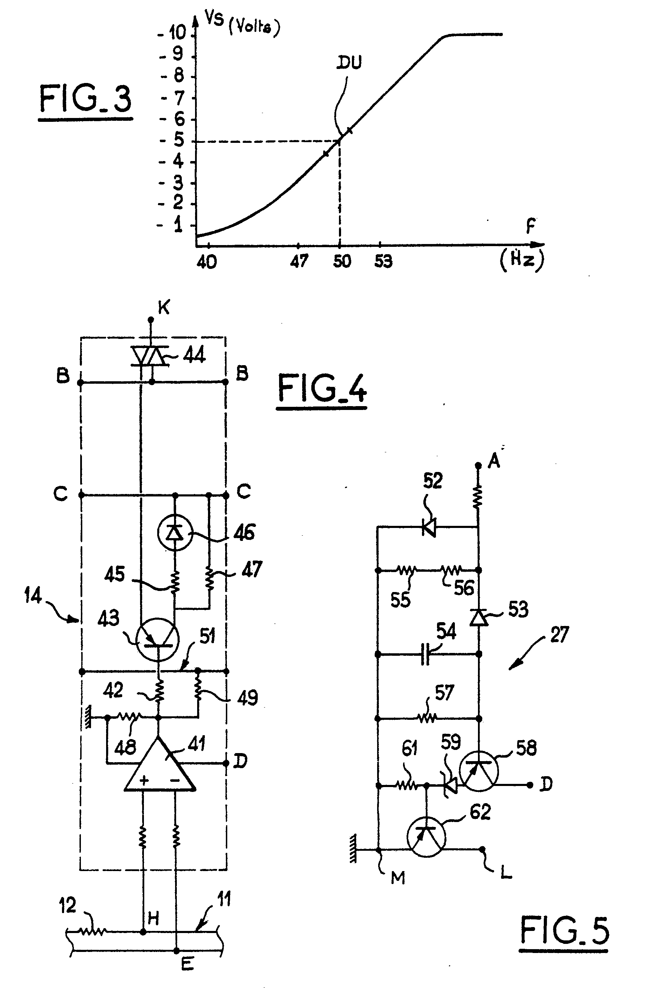

On a représenté sur la Figure 3 la courbe caractéristique du transducteur utilisé dans l'exemple décrit, courbe qui donne la tension de sortie $V_s$ (en volts) en fonction de la fréquence mesurée (en hertz). Les graduations indiquées sur la Figure donnent la correspondance numérique entre ces deux grandeurs. Le domaine pratique d'utilisation correspond au segment DU.

Egalement branché entre les bornes A et B, correspondant à la phase 4 et au neutre 5, un étage d'alimentation 13 délivre sur deux bornes respectives C, D des tensions continues de −15 volts et −10 volts, et, sur une borne E, un potentiel de référence $V_r$. La borne E est reliée à l'extrémité de la chaîne de résistances 11, de manière à former une boucle où la tension varie de façon échelonnée entre $V_s$ et $V_r$, l'extrémité de cette boucle étant mise à la masse.

A l'étage d'alimentation 13 est associé un étage d'ajustement du potentiel de référence $V_r$. Ces deux étages qui seront décrits plus loin en détail, sont étroitement interconnectés, ce qui a conduit à les représenter, sur la Figure 1, sous la même référence 13.

Entre la borne E, délivrant le potentiel de référence $V_r$ et chaque point commun H à deux résistances 12, est branché un étage de comparaison et de déclenchement 14, relié d'autre part, au neutre 5 par la borne B et à l'une des phases par une résistance de dissipation 15.

Dans l'exemple décrit, il existe douze étages 14 dont neuf seulement ont été représentés par raison de simplification, et autant de résistances 15 associées, qui sont connectées à raison de quatre sur chaque phase.

On va maintenant décrire en détail, en référence à la Figure 2, l'étage d'alimentation 13. Cet étage comprend un transformateur 16 branché par les bornes A et B, entre la phase 4 et le neutre 5, et connecté à un pont redresseur 17 sur lequel sont montés en parallèle un premier circuit délivrant sur la borne C une tension continue de −15 volts, et un second circuit délivrant sur la borne D une tension continue de −10 volts, cette dernière tension étant contrôlée par une diode Zener 18.

Des résistances 19, 20, 21, sont calculées pour obtenir ces tensions ainsi que pour obtenir, sur le second circuit, le potentiel de référence $V_r$, qui vaut nominalement −5 volts, et qui est ajustable par une résistance réglable 22 en série sur le second circuit.

Une diode 23 en série sur le second circuit évite les courants inverses et des condensateurs 24, 25, 26, en dérivation absorbent les composantes alternatives résiduelles.

Le fonctionnement s'explique de lui-même si l'on suppose connectées les deux bornes L et M pour fermer le second circuit. En réalité, un étage 27 de détection et de contrôle des sous-tensions anormales est branché entre ces bornes et sera décrit plus loin en détail.

L'étage de détection des surtensions, représenté sur la partie gauche de la Figure 2, comprend essentiellement un transistor 28 dont l'émitteur est à la masse et dont la base est reliée au point commun à deux résistances 29, 31, montées en série sur une boucle 32, en dérivation sur le second circuit d'alimentation précité entre la phase et une des bornes de sortie du point redresseur 17.

Cette boucle 32 reçoit la tension nominale de 220 volts entre phase et neutre du réseau par une liaison 33 à la borne A, comportant un condensateur de découplage 34. Elle comprend deux diodes redresseuses 35, 36, en série et, en dérivation, une résistance réglable d'ajustement 37 et un condensateur 38 pour absorber les composantes alternatives résiduelles. Enfin, elle comprend en série une diode Zener 39 d'une tension nominale de 10 volts.

Le collecteur du transistor 28 est relié à la borne E et, par là, à la résistance 21 du second circuit d'alimentation. En admettant provisoirement, pour faciliter le raisonnement, que les bornes L et M sont interconnectées, on comprend que, lorsque la tension du réseau dépasse une certaine valeur, le transistor 28 se met à conduire et injecte d'autant plus de courant dans la résistance 21, provoquant la baisse du potentiel de référence $V_r$ en valeur absolue.

Dans l'exemple décrit, les composants sont calculés pour que le transistor 28 commence à conduire quand la tension du réseau atteint 240 volts, et pour que la tension de référence $V_r$ s'annule quand la tension du réseau atteint approximativement 260 volts.

On va maintenant décrire, en détail, en référence à la Figure 4, un des étages de comparaison et de déclenchement 14. Cet étage comprend un amplificateur opérationnel 41, monté en comparateur, dont l'entrée inverseuse est reliée à la borne E de l'étage d'alimentation 13 (Figure 2) et dont l'entrée non inverseuse est reliée à une des bornes H de la ligne 11 formant la chaîne des résistances 12.

Une des entrées de polarisation de l'amplificateur 41 est reliée à la borne D de l'étage d'alimentation 13 (soit sous −10 volts, dans l'exemple décrit), et l'autre entrée est reliée à la masse.

La sortie de l'amplificateur 41 est reliée, à travers une résistance 42, à la base d'un transistor 43, dont le circuit émetteur-collecteur est en série dans le circuit de gâchette d'un triac 44, monté en interrupteur sur une ligne reliant une des phases du réseau, par l'intermédiaire d'une des résistances 15 et de la borne K, à la borne B reliée au neutre.

Le circuit de gâchette est, d'autre part, relié à la borne C de l'étage d'alimentation 13 (soit ici à −15 volts), par l'intermédiaire de deux branches montées en parallèle et comportant, l'une, une résistance 45 en série avec une diode luminescente 46, formant témoin de fonctionnement, l'autre, une résistance 47.

La sortie de l'amplificateur 41 est reliée en parallèle, d'une part, à la masse à travers une résistance 48 et, d'autre part, à travers une résistance de calibration 49 à une ligne collectrice 51 reliée à un appareil de mesure (non représenté) qui peut être un milliampèremètre.

Quand la tension à la borne H dépasse celle à la borne E, qui est le potentiel de référence $V_r$, l'amplificateur 41 bascule et sature le transistor 43, ce qui ferme le circuit de gâchette du triac 44. La résistance de dissipation 15 est alors mise en service.

On va maintenant décrire, en référence à la Figure 5, l'étage 27 de détection et de contrôle des sous-tensions anormales.

Cet étage comprend un circuit en boucle, relié à la borne de phase A et muni de diodes redresseuses 52, 53, et d'un condensateur de filtrage 54 en dérivation. Des résistances 55, 56 sont montées également en dérivation afin de permettre un ajustement de l'étage aux conditions de fonctionnement, ainsi qu'une autre résistance 57 pour coopérer avec le condensateur 54.

Le circuit se ferme sur le circuit baseémetteur d'un transistor 58, dont le collecteur est relié à la borne D (−10 volts). Sur le circuit d'émetteur sont montées en séries une diode Zener 59 et une résistance de charge 61, entre lesquelles est branchée la base d'un transistor 62, dont le circuit émetteur-collecteur joint les bornes L et M (Figure 2).

On comprend que, si la tension du réseau vient à baisser au dessous d'une certaine valeur limite, le transistor 58 se bloque, entraînant le blocage du transistor 62. Les bornes L et M sont alors isolées l'une de l'autre et un potentiel de −10 volts est envoyé sur la borne E comme potentiel de référence $V_r$.

On va maintenant décrire le fonctionnement général du dispositif qui vent d'être décrit.

En fonctionnement à peu près normal, par exemple, en supposant que la charge constituée par les récepteurs des utilisateurs est principalement ohmique, la génératrice démarre et s'amorce d'elle-même, grâce aux condensateurs 6, 7, 8.

L'énergie fluide animant la génératrice étant supposée constante, donnée, et surabondante, la fréquence du courant a naturellement tendance à prendre une valeur d'autant plus élevée que la charge du réseau est faible. Cette fréquence, mesurée et convertie en tension par le transducteur, vient appliquer aux bornes H des potentiels décroissants, à mesure que l'on se déplace de la gauche vers la droite sur la Figure 1.

Plus la fréquence tend à augmenter, plus la tension qui la représente augmente en valeur absolue (Figure 3), et plus le potentiel, en chaque point H, augmente en valeur absolue. Le premier point H, dont le potentiel devient supérieur au potentiel de référence, est celui de gauche sur la Figure 1, ce qui provoque, par intervention de l'étage de comparaison et de déclenchement correspondant 14, la mise en circuit de la résistance 15 qui y est connectée. Cette mise en service augmente d'autant la charge du réseau et, par conséquent, tend à faire diminuer la fréquence.

Si, à un instant quelconque, un certain nombre de résistances 15 sont en service et si un utilisateur diminue sa consommation, la tendance à l'augmentation de la fréquence, à partir d'une valeur stable de 50 Hz, provoquera la mise en service d'une résistance 15 supplémentaire pour aller à l'encontre de cette augmentation. Il en résulte que la charge totale vue par la génératrice est sensiblement constante.

Dans le cas de mise en service de charges fortement inductives par un utilisateur, le problème se complique, car la loi relient la fréquence à la tension se trouve modifiée. Plus précisément, la fréquence correspondant à une même tension se trouve ici plus élevée. Il convient donc d'élever la valeur de consigne sur la fréquence, en la faisant passer par exemple de 50 Hz à 52 Hz.

L'étage de détection des surtensions décrit plus haut réalise automatiquement cette opération en abaissant en valeur absolue le potentiel de référence $V_r$ quand la tension dans le réseau tend à augmenter.

En cas de mise en service d'un moteur, un autre phénomène a tendance à se produire. La machine tend à se désamorcer et à s'emballer, mais en même temps, la tension diminue fortement dans le réseau. Si on laissait fonctionner normalement la régulation de fréquence, toutes les résistances 15 seraient mises en service pour combattre l'emballement, ce qui aggraverait la chute de tension. Il convient donc, dans ces circonstances, de mettre hors service la régulation. Ce rôle est tenu par l'étage 27 qui applique sur la ligne de référence un potentiel de −10 volts. Cette valeur n'est jamais atteinte (en valeur absolue) par la tension représentant la fréquence, de sorte qu'aucune des résistances 15 n'est mise en service. Dès que la tension du réseau redevient normale, l'étage 27 revient dans son état initial et laisse la régulation jouer son rôle.

L'invention permet de disposer d'une tension d'utilisation stabilisée sur un réseau alimenté par un générateur autonome lui-même actionné par l'énergie, constante ou non d'un fluide naturel, malgré les aléas de consommation.

Dans ses perfectionnements, elle permet de tenir compte des charges réactives.

Le générateur envisagé ici est une génératrice asynchrone, prise comme exemple parce que présentant, dans un montage autonome, des avantages importants sur l'alternateur, comme exposé au début.

Il est cependant à noter que l'invention pourrait s'appliquer à tout générateur alternatif et, par exemple, à un alternateur.

**Revendications**

1. Procédé pour régler la tension aux bornes d'un générateur électrique alternatif autonome (1) à régime variable tel qu'un générateur actionné par une machine mue par un fluide naturel, notamment d'une génératrice asynchrone, au cours duquel on règle automatiquement la fréquence par rapport à une valeur de consigne, en mettant sélectivement en circuit des résistances de dissipation (15), caractérisé en ce qu'on effectue les opérations suivantes:

a) on mesure la tension dans au moins l'une (4) des phases (2, 3, 4) du générateur;

b) on fait varier automatiquement la valeur de consigne (Vr) de la fréquence en fonction des variations de tension, la variation de la valeur de consigne étant en sens inverse de la variation de tension constatée.

2. Procédé conforme à la revendication 1, caractérisé en ce qu'on convertit la fréquence mesurée en une tension continue analogique, et en ce qu'on matérialise la valeur de consigne sous la forme d'un potentiel de référence (Vr) fonction de la tension produite par le générateur.

3. Système pour régler la tension aux bornes d'un générateur électrique alternatif autonome (1) à régime variable tel qu'on générateur actionné par une machine mue par unfluide naturel, tel qu'une génératrice asynchrone, et pour appliquer un procédé conforme à l'une quelconque des revendications 1 ou 2, caractérisé en ce qu'il comprend:

a) des moyens de mesure (16) de la tension dans au moins l'une (4) des phases (2, 3, 4) du générateur;

b) des moyens (13) sensibles à la tension mesurée pour faire varier la valeur de consigne d'un régulateur de fréquence en sens inverse des variations de la tension mesurée, ce régulateur étant relié à des moyens (14) de mise en circuit des résistances de dissipation (15).

4. Système conforme à la revendication 3, caractérisé en ce que les moyens (14) pour mettre en circuit les résistances de dissipation (15) comprennent, pour chaque résistance, un comparateur (41) dont les entrées sont reliées respectivement à une source (E) de potentiel de référence (Vr) et à un point (H) d'une chaîne (11) de résistances (12) en série, dont une extrémité est elle-même reliée à la source de potentiel de référence (Vr) et dont l'autre extrémité est reliée à la sortie d'un transducteur (9) délivrant une tension continue (Vs) proportionnelle à la fréquence du courant délivré par le générateur (1), la sortie de chaque comparateur (41) étant reliée à la commande (43) d'un interrupteur (44) en série avec chaque résistance de dissipation (15).

5. Système conforme à l'une des revendications 3 ou 4, caractérisé en ce qu'il comprend des moyens (27) sensibles à la tension dans au moins l'une des phases du générateur (1) pour mettre le système hors service dans le cas d'une baisse anormale de la tension.

**Claims**

1. Method for regulating the terminal voltage of an independent, variable-speed alternating-current electric generator (1) such as a generator driven by a machine under the action of a natural fluid and especially an asynchronous generator, during which the frequency in relation to a reference value is regulated automatically by selectively putting dissipative resistors (15) in circuit, characterized in that the following operations are carried out:

a) the voltage is measured in at least one (4) of the phases (2, 3, 4) of the generator;

b) the reference value (Vr) of the frequency is varied automatically as a function of the variations in voltage, the variation in reference value being in the direction opposite to the variation in the voltage found.

2. Method according to claim 1, characterized in that the measured frequency is converted to an analog direct-current voltage and that the reference value is materialized in the form of a reference potential (Vr) which is a function of the voltage produced by the generator.

3. System for regulating the terminal voltage of an independent, variable speed alternating-current electric generator (1) such as a generator of the asynchronous type which is driven by a machine under the action of a natural fluid and for applying a method according to either of claims 1 and 2, characterized in that it comprises:

a) means (16) for measuring the voltage in at least one (4) of the phases (2, 3, 4) of the generator;

b) means (13) responsive to the measured voltage in order to cause a variation in the reference value of a frequency regulator in the direction opposite to the variations in the measured voltage, this regulator being connected to means (14) for putting the dissipative resistors (15) in circuit.

4. System according to claim 3, characterized in that the means (14) for putting the dissipative resistors (15) in circuit comprise in the case of each resistor a comparator (41) whose inputs are connected respectively to a source (E) of reference potential (Vr) and to one point (H) of a chain (11) of resistors (12) in series, one end of which is in turn connected to the source of reference potential (Vr) and the other end of which is connected to the output of a transducer (9) for delivering a direct-current voltage (Vs) which is proportional to the frequency of the current delivered by the generator (1), the output of each comparator (41) being connected to the control element (43) of a switch (44) which is in series with each dissipative resistor (15).

5. System according to either of claims 3 or 4, characterized in that it comprises means (27) which are responsive to the voltage in at least one of the phases of the generator (1) in order to put the system out of service in the event of an abnormal voltage drop.

## Patentansprüche

1. Verfahren zum Regeln der Spannung an den Anschlüssen eines unabhängigen elektrischen Wechselstromgenerators (1) mit variablem Arbeitsbereich, beispielsweise eines Generators, der durch eine von einem natürlichen Strömungsmittel angetriebene Maschine betätigt wird, insbesondere eines Asynchrongenerators, wobei die Frequenz automatisch einem Sollwert nachgeregelt wird, indem Leisungsaufnahmewiderstände (15) selektiv in den Stromkreis geschaltet werden, dadurch gekennzeichnet, daß die folgenden Operationen ausgeführt werden:
   a) die Spannung wird an wenigstens einer (4) der Phasen (2, 3, 4) des Generators gemessen,
   b) der Sollwert (Vr) der Frequenz wird in Abhängigkeit von Spannungsänderungen automatisch im umgekehrten Sinn wie die festgestellten Spannungsänderungen verändert.

2. Verfahren nach Anspruch 1, dadurch gekennzeichnet, daß die gemessene Frequenz in eine analoge Gleichspannung umgesetzt wird und daß der Sollwert durch ein von der vom Generator erzeugten Spannung abhängiges Bezugspotential (Vr) ausgedrückt wird.

3. Einrichtung zum Regeln der Spannung an den Anschlüssen eines elektrischen, unabhängigen Wechselstromgenerators (1) mit variablem Arbeitsbereich, beispielsweise eines Generators, der durch eine von einem natürlichen Strömungsmittel angetriebene Maschine betätigt wird, beispielsweise eines Asynchrongenerators, zur Durchführung des Verfahrens nach einem der Ansprüche 1 und 2, gekennzeichnet durch
   a) Meßvorrichtungen (16) für die Spannung an wenigstens einer (4) der Phasen (2, 3, 4) des Generators,
   b) Vorrichtungen (13), die auf die gemessene Spannung so ansprechen, daß sie den Sollwert eines Frequenz-reglers im umgekehrten Sinn wie die gemessenen Spannungsänderungen verändern, wobei dieser Regler mit Mitteln (14) verbunden ist, die die leistungsaufnahmewiderstände (15) in den Stromkreis legen.

4. Einrichtung nach Anspruch 3, dadurch gekennzeichnet, daß die Mittel (14) zum Einschalten der Leistungsaufnahmewiderstände (15) für jeden Widerstand einen Komparator (41) enthalten, dessen Eingänge an eine Quelle (E) für ein Bezugspotential (Vr) und an einem Punkt (H) einer Kette (11) aus Serienwiderständen (12) angeschlossen sind, von der das eine Ende seinerseits an die Bezugspotentialquelle (Vr) und das andere Ende an den Ausgang eines Umsetzers (9) angeschlossen sind, der eine der Frequenz des vom Generator (1) gelieferten Stroms poroportionale Gleichspannung (Vs) abgibt, wobei der Ausgang jedes Komparators (41) mit dem Steueranschluß (43) eines Unterbrechers (44) verbunden ist, der jeweils mit einem Leistungsaufnahmewiderstand (15) in Serie geschaltet ist.

5. Einrichtung nach Anspruch 3 oder 4, gekennzeichnet durch Vorrichtungen (27), die abhängig von der Spannung an wenigstens einer Phase des Generators (1) bei einem unnormalen Absinken der Spannung die Einrichtung außer Betrieb setzen.

**FIG.1**

**FIG.2**

FIG_3

FIG_4

FIG_5